# FASCICULE DE BREVET EUROPEEN

(11) **EP 1 438 497 B1**
(45) Date de publication et mention de la délivrance du brevet: **02.01.2008**
(21) Numéro de dépôt: 02785491.8
(22) Date de dépôt: 11.09.2002
(51) Int. Cl.: F02M 21/02

(54) **RAMPE A CARBURANT COMPORTANT UN ELEMENT EXPANSIBLE**
KRAFTSTOFF-VERTEILERLEITUNG MIT EINEM EXPANDIERBAREN ELEMENT
FUEL RAIL COMPRISING AN EXPANDABLE ELEMENT

(30) Priorité: 25.09.2001 FR 0112348
(43) Date de publication de la demande: 21.07.2004
(73) Titulaire: Institut Français du Pétrole, 92852 Rueil Malmaison Cédex (FR)
(72) Inventeur: VENTURI, Stéphane, F-07100 Roiffieux (FR); TILAGONE, Richard, F-36138 Les Côtes d'Arey (FR); BOURRY, Bruno, F-07290 Quintenas (FR)
(86) Numéro de dépôt international: PCT/FR2002/003086
(87) Numéro de publication internationale: WO 2003/036073

(56) Documents cités:
- EP-A- 1 036 935
- DE-A- 4 131 952
- DE-C- 19 635 450
- US-A- 5 447 142
- US-A- 5 896 843
- PATENT ABSTRACTS OF JAPAN vol. 1998, no. 05, 30 avril 1998 (1998-04-30) & JP 10 018915 A (AISAN IND CO LTD), 20 janvier 1998 (1998-01-20)

## Description

La présente invention concerne un dispositif d'injection d'un carburant dans un moteur à combustion interne.

Plus particulièrement, l'invention se rapporte à un dispositif d'injection sous forme liquide d'au moins un carburant sous pression, notamment ceux présentant une température d'ébullition inférieure à la température ambiante (environ +20°C) à la pression atmosphérique (environ 0,1 MPa).

Ce carburant peut comprendre, par exemple, du GPL (Gaz de Pétrole Liquéfié), du GNV (Gaz Naturel pour Véhicules), du dimethylether (DME), du dimétoxyméthane, du dimétoxyéthane, du diéthyléther, ou des mélanges de ces carburants.

Cette injection peut être effectuée soit directement dans les cylindres du moteur (injection directe) soit dans une conduite ou répartiteur d'admission du moteur (injection indirecte).

Dans la suite de la description, on prendra l'exemple, non limitatif, de l'injection de carburant GPL sous forme liquide.

La qualité du démarrage d'un moteur fonctionnant au carburant GPL est conditionnée par la capacité de son dispositif d'injection à injecter ledit GPL sous forme sensiblement totalement liquide dès que l'injection est commandée.

Ainsi, pour des temps d'injection de base correspondant à une injection du GPL en phase liquide, généralement cartographiés, la présence incontrôlée de GPL en phase gazeuse, dans la rampe d'injection ou dans les autres conduits du circuit de carburant, ne permet pas de contrôler efficacement, lors de cette injection, la quantité massique de GPL nécessaire au fonctionnement du moteur.

Il est en outre connu de l'homme du métier que la pression de vapeur de carburant présente dans le réservoir et dans le circuit d'injection dépend fortement de la température régnant autour de ces éléments.

Plus généralement, la vaporisation du GPL peut intervenir dans les cas suivants :
- une augmentation de la température du GPL de telle sorte que la pression du carburant devienne inférieure ou égale à la pression de vapeur saturante correspondante du carburant GPL dans le réservoir et/ou dans le circuit d'injection, par exemple dans la rampe d'injection lors des phases d'arrêt du moteur quand celui-ci est encore chaud ;
- une baisse de la pression dans la rampe (à température constante) à un seuil inférieur ou égal à la pression de vapeur saturante correspondant à la température ambiante. Ce cas se rencontre notamment à l'arrêt du moteur et à la suite d'une fuite de carburant au niveau des injecteurs, ceux-ci n'étant généralement pas étanches à la pression du GPL présente dans la rampe d'injection.

Avec des technologies d'injection de carburant liquide telles que celles classiquement utilisées pour une injection de carburant liquide de type essence, le fort écart de pression présent entre l'amont et l'aval de l'injecteur, lors de l'injection de GPL liquide, provoque une fuite de carburant au niveau desdits injecteurs, notamment en phase d'arrêt du moteur.

Cette fuite est d'autant plus importante que l'écart en pression est beaucoup plus important que celui classiquement retenu pour une injection d'essence. C'est notamment le cas lorsque la rampe d'injection du carburant GPL est directement en communication avec le réservoir dont la pression interne varie classiquement et suivant la température ambiante entre 0,3 et 1,5 MPa environ.

Cette fuite est à l'origine d'une saturation à terme des conduits d'admission du moteur en GPL gazeux. Dans le cas d'un moteur présentant un allumage jumo-statique, il y a un risque important d'inflammation du GPL gazeux présent dans lesdits conduits d'admission et de retour de flamme pouvant endommager la partie admission du moteur.

De plus, la quantité de GPL gazeux présente dans le conduit d'amission suite à cette fuite est difficilement prise en compte et perturbe le démarrage.

En outre, la diminution de la pression du GPL dans la rampe d'admission occasionne une vaporisation partielle voir complète du GPL liquide présent dans cette rampe et ne permet pas ensuite un contrôle précis des quantités injectées.

En plus, cette fuite entraîne une augmentation de l'émission des polluants à la sortie du moteur.

Le brevet US 5,377,465 décrit une méthode permettant de maintenir, sous l'effet d'une pompe, un carburant GPL sous forme liquide dans la rampe d'injection lors du fonctionnement du moteur à une pression constamment supérieure à la pression de vapeur saturante du réservoir et cela grâce à la présence d'un régulateur de pression positionné en aval des injecteurs.

La demande de brevet japonais JP 11036990 divulgue un dispositif pour augmenter la pression d'un carburant sous l'effet d'une pompe basse pression dans une rampe d'injection comprenant une conduite de retour carburant.

La demande de brevet DE 4 131 952 décrit un dispositif d'injection d'un carburant pour un moteur à combustion interne comprenant un collecteur de carburant de forme tubulaire (ou rampe) permettant d'amener du carburant à des injecteurs. Un corps tubulaire en matériau déformable élastiquement de plus petite section radiale que le collecteur est logé à l'intérieur de ce collecteur de façon à délimiter un conduit d'amenée de carburant pour les injecteurs entre la paroi externe de ce corps et la paroi interne du collecteur. L'intérieur de ce corps déformable est relié au conduit d'amenée par un régulateur de pression qui permet de faire varier le volume du corps tubulaire pour absorber les variations de pression cycliques qui ont lieu dans le conduit d'manée de carburant.

Aucun de ces systèmes ne permet cependant de résoudre efficacement les problèmes spécifiques de fuite et de vaporisation du GPL et, notamment, lors de l'arrêt et/ou du redémarrage du moteur.

Pour remédier à ces fuites, la demande de brevet EP-A-1,036,935 propose d'isoler le système d'alimentation comprenant les injecteurs et de purger le carburant liquide vers un système de stockage (canister) approprié.

Ce mode de fonctionnement nécessite donc la présence d'un circuit et d'un réservoir supplémentaire de carburant qui tend à augmenter de façon sensible le coût du dispositif.

De plus, cette solution présente comme inconvénient la limitation de la capacité d'absorption dudit canister et l'obligation de recycler le GPL, nécessairement sous forme essentiellement gazeuse, contenu dans celui-ci car une évacuation externe est à proscrire, essentiellement pour des raisons de pollution.

La présente invention se propose de remédier aux inconvénients mentionnés ci-dessus grâce à un dispositif d'injection de réalisation simple et efficace.

Ainsi, l'invention concerne un dispositif d'injection d'un carburant pour un moteur à combustion interne, ledit dispositif comprenant au moins une rampe d'injection communiquant avec au moins un injecteur par un orifice de passage du carburant, avec une conduite d'amenée de carburant par une embouchure et avec une conduite de retour de carburant par une embouchure, et au moins un élément expansible logé dans la rampe, caractérisé en ce que ledit élément expansible obture, en position active d'expansion, ledit orifice de passage et/ou lesdites embouchures

Avantageusement, ledit élément peut comprendre une enveloppe élastique reliée à des moyens d'expansion de ladite enveloppe.

Les moyens d'expansion peuvent comporter des moyens d'injection d'un fluide sous pression à l'intérieur de ladite enveloppe.

Les moyens d'expansion peuvent comprendre un vérin ou au moins une pompe de direction assistée du véhicule ou au moins une pompe d'injection dudit carburant dans ladite rampe.

Préférentiellement, des moyens d'obturation peuvent être disposés entre l'élément expansible et les moyens d'expansion.

De manière avantageuse, le carburant utilisé peut être compris dans le groupe constitué par le GPL (gaz de pétrole liquéfié), le GNV (gaz naturel pour véhicules), le dimethylether (DME), le dimétoxyméthane, le dimétoxyéthane, le diéthyléther ou d'un mélange d'au moins deux desdits carburants.

Le carburant peut présenter un point d'ébullition inférieur à la température ambiante sous la pression atmosphérique.

L'invention peut s'appliquer également à un dispositif d'injection pour un fonctionnement en carburation mixte d'un moteur, dans lequel l'un des carburants est injecté par la rampe pendant une fraction du temps de fonctionnement dudit moteur et l'autre des carburants étant injecté durant une autre fraction du temps de fonctionnement de ce moteur.

Le dispositif selon l'invention permet ainsi avantageusement de gérer de manière simple, efficace et peu coûteuse l'injection liquide du carburant lors du démarrage, à froid ou à chaud, d'un moteur à combustion interne fonctionnant avec un carburant sous pression tel que définit précédemment.

L'invention permet, en outre, de s'affranchir des problèmes de confinement du carburant GPL liquide dans le circuit d'injection en évitant notamment les conséquences néfastes d'éventuelles fuites des injecteurs.

De plus, il est possible d'utiliser, pour l'injection du carburant GPL liquide, les injecteurs et les pompes classiquement commercialisés pour l'injection directe ou indirecte d'essence, en fonction du lieu et de la pression d'injection du GPL dans le moteur.

D'autres caractéristiques, détails et avantages de l'invention apparaîtront à la lecture de la description de deux modes de réalisation non limitatifs de l'invention, en référence aux figures annexées sur lesquelles les organes similaires sont désignés par les mêmes chiffres de référence et où :
- les figures 1 et 2 illustrent le schéma général d'un dispositif d'injection d'un carburant sous pression selon l'invention ;
- les figures 3 et 4 illustrent un deuxième mode de réalisation d'un dispositif selon l'invention.

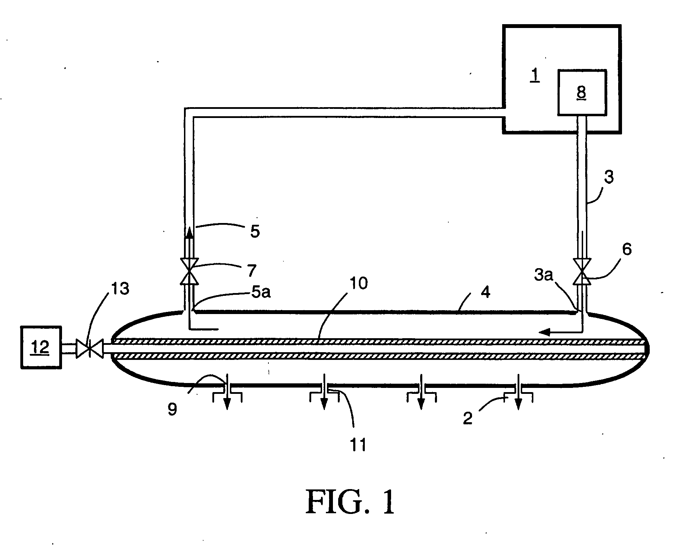

En se reportant à la figure 1, le dispositif comprend un réservoir 1 étanche dans lequel est stocké, sous pression, un carburant présentant un point d'ébullition inférieur à la température ambiante (environ 20°C) à la pression atmosphérique (environ 0,1 MPa), tel que du GPL.

Ce carburant est injecté dans un répartiteur d'admission (non représenté) ou dans les cylindres du moteur (non représentés) par des injecteurs 2.

De manière avantageuse, les injecteurs utilisés sont ceux classiquement utilisés pour une injection liquide de carburant liquide, tel que l'essence.

Le carburant GPL est transporté, sous l'action d'une pompe 8, du réservoir 1 jusqu'à une rampe d'injection 4 du GPL par l'intermédiaire d'une conduite d'amenée de carburant 3 qui aboutit à une embouchure 3a prévue dans cette rampe.

Le carburant non injecté vers les cylindres du moteur ou vers le répartiteur d'admission est réintégré dans le réservoir 1 par une conduite de retour de carburant 5 dont l'embouchure 5a est également prévue dans la rampe 4.

En amont et en aval de la rampe 4 (en considérant le sens de circulation du GPL) sont placés des moyens d'obturation 6 et 7 permettant notamment de réguler l'alimentation en carburant GPL de la rampe 4, par exemple lors d'un arrêt moteur et/ou d'un démarrage.

Dans l'exemple décrit, ces moyens d'obturation sont placés sur les conduites d'amenée 3 et de retour 5 du carburant GPL et plus précisément entre le réservoir 1 et la rampe 4.

Les moyens d'obturation 6 et 7 sont généralement des systèmes commandés électriquement par un moyen de commande extérieur, tels que des électrovannes, mais il est possible sans sortir du cadre de l'invention de remplacer dans certains cas (c'est à dire selon des possibilités techniques déterminées par l'homme de l'art) lesdites électrovannes par des clapets anti-retour de type connu.

Dans la suite de la présente description, ces moyens d'obturation seront décrits en position ouverte lorsqu'ils permettent le passage du carburant les traversant, en position fermée lorsqu'ils l'empêchent.

Comme cela est connu, cette rampe est en communication avec les injecteurs 2 par l'intermédiaire d'orifices de passage 9.

Ces orifices 9 sont des orifices circulaires ou en forme de fentes prévus à travers la paroi de la rampe 4 et communiquent avec des canalisations 11 reliant les injecteurs 2 à ces orifices.

La rampe 4 comprend dans son volume interne creux (ou partie interne) au moins un élément expansible 10 qui permet d'obturer les orifices 9 et/ou les embouchures 3a, 5a des conduites 3, 5.

A titre d'exemple, il est prévu un seul élément expansible sous la forme d'une enveloppe élastique étanche 10 faite d'un matériau élastique de composition connue, tel qu'une matière caoutchouteuse, pouvant être éventuellement renforcée pour résister aux agressions chimiques du carburant GPL et/ou aux contraintes mécaniques qu'elle va subir.

Cette enveloppe 10 sera dimensionnée de telle manière que, en position de repos, son volume soit le plus réduit possible afin de ne pas gêner la circulation du carburant G PL dans la rampe 4 alors que, en position active, elle puisse occuper, de par son expansion, la totalité du volume interne de ladite rampe.

Plus précisément, l'enveloppe 10 s'étend, dans sa position de repos, dans la même direction que la rampe et présente une forme tubulaire avec une section diamétrale plus petite que celle de la rampe 4 et une dimension longitudinale telle que cette enveloppe s'étende sur toute la longueur de cette rampe.

Comme visible sur la figure 1, l'enveloppe 10 est reliée à l'une de ses extrémités à un moyen d'expansion 12 alors que son autre extrémité est fermée.

La mise en action du moyen d'expansion 12 permet d'accroître le volume de ladite enveloppe grâce, par exemple, à l'injection d'un fluide sous pression.

Additionnellement, un moyen de fermeture 13, tel qu'une électrovanne, permet de contrôler la communication du fluide entre l'enveloppe 10 et le moyen d'expansion 12.

Ce moyen 12 est dimensionné de telle façon que, lors du fonctionnement de celui-ci, l'enveloppe 10 augmente de volume et occupe sensiblement tout le volume de la rampe 4 en plaquant la paroi externe de cette enveloppe sur la paroi interne de la rampe.

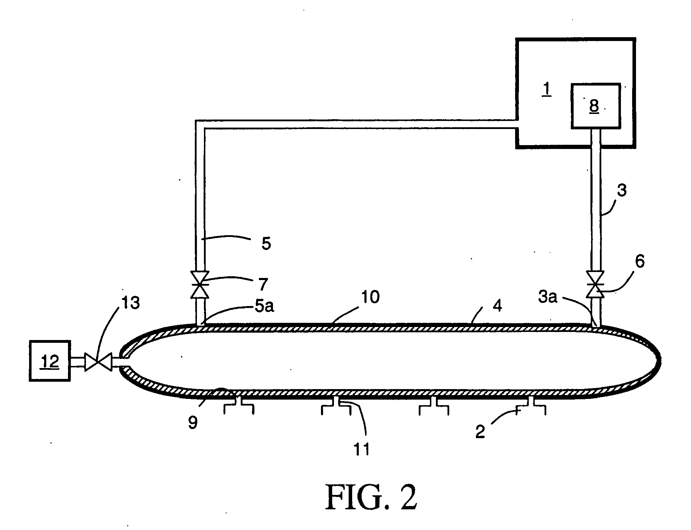

Dans cette configuration, la paroi de l'enveloppe 10 obture, d'une part, les orifices 9 de passage du carburant vers les injecteurs et, d'autre part, les embouchures 3a, 5a des conduites d'amenée 3 et de retour 5 du carburant dans la rampe 4, comme cela est montré à la figure 2.

Préférentiellement, il est prévu que le moyen 12 soit un générateur de pression et/ou de dépression.

A titre d'exemple, ce générateur pourra être un organe externe au fonctionnement habituel d'un véhicule, tel qu'un vérin dont le cylindre est en communication avec l'intérieur de l'enveloppe 10 et permettra, selon les besoins, de créer une surpression ou une dépression dans celle-ci par rapport à la pression régnant dans la rampe 4.

Alternativement, le moyen d'expansion 12 pourra, sans sortir du cadre de l'invention, être un élément jouant un autre rôle dans le fonctionnement du véhicule tel que, par exemple, la pompe de la direction assistée dudit véhicule ou la pompe d'injection du carburant dans la rampe.

En fonctionnement, le dispositif d'injection présente en général une configuration illustrée par la figure 1.

Dans cette configuration, les moyens d'obturation 6 et 7 sont en position ouverte, l'électrovanne 13 est en position fermée et l'enveloppe 10 est en position de repos, c'est à dire qu'elle n'occupe qu'un pourcentage faible du volume total intérieur de la rampe 4. Dans cette position, l'enveloppe peut être vide ou ne contenir qu'une quantité réduite de fluide telle que cette quantité ne puisse pas permettre l'expansion de l'enveloppe.

De ce fait, le carburant GPL provenant du réservoir 1 est véhiculé, sous l'action de la pompe 8, dans la conduite 3, traverse la paroi de la rampe 4 par l'embouchure 3a et pénètre dans le volume interne de cette rampe puis circule entre la paroi externe de l'enveloppe 10 et la paroi interne de la rampe 4 pour ensuite alimenter les injecteurs 2 à travers les orifices 9 par les canalisations 11.

Lors de l'arrêt du moteur, tel qu'illustré à la figure 2, le moyen d'obturation 6 est, préférentiellement dans un premier temps, fermé et isole le réservoir 1 de la rampe 4. Le moyen d'expansion 12, après ouverture de l'électrovanne 13, est actionné et injecte un fluide sous pression dans le volume interne de l'enveloppe 10 pour permettre l'expansion de cette enveloppe jusqu'à occuper la totalité du volume intérieur de la rampe.

Dans cette position, l'enveloppe 10, dans sa position active d'expansion, obture les orifices 9 et les embouchures 3a, 5a des conduites 3, 5.

Entre la position de repos et la position active de l'enveloppe 10, le carburant GPL résiduel dans la rampe 4 est évacué à travers l'embouchure 5a vers la conduite de retour 5 ou à travers les orifices 9 vers les injecteurs 2.

Avantageusement, de façon à éliminer le GPL évacué à travers les orifices 9, il est possible de maintenir, sur quelques tours vilebrequin du moteur, la commande de l'allumage et de l'ouverture des injecteurs 2.

Le moyen d'obturation 7 est ensuite préférentiellement fermé de façon à isoler le réservoir 1 du reste du circuit carburant et à éviter toute vaporisation du carburant.

De même, le moyen 12 et/ou l'électrovanne 13 est avantageusement fermé de manière à conserver l'enveloppe dans sa position active d'expansion.

Lorsque le véhicule est en stationnement et après l'arrêt du moyen d'expansion 12, l'électrovanne 13 pourra être éventuellement réouverte, ce qui entraînera une rétractation de l'enveloppe 10 de par le différentiel de pressions entre le volume interne de l'enveloppe 10 et le moyen d'expansion 12.

Grâce à cela, il se crée une dépression dans la rampe 4 qui contribue avantageusement à réduire les fuites au niveau des injecteurs 2.

Lors du redémarrage du moteur, le moyen d'obturation 6 et éventuellement l'électrovanne 13, dans le cas où celle-ci aurait été maintenue en position fermée, sont d'abord commandés en position ouverte et, sous l'action de la pompe 8, le carburant est réinjecté sous pression dans la rampe 4.

La pression du carburant arrivant par la conduite 3 à travers l'embouchure 3a comprime alors l'enveloppe 10 et provoque le refoulement du fluide contenu dans celle-ci vers le moyen d'expansion 12 jusqu'à ce que ce que cette enveloppe arrive à sa position de repos, puis l'électrovanne 13 est ensuite éventuellement basculée en position fermée pour maintenir cette enveloppe dans sa position de repos.

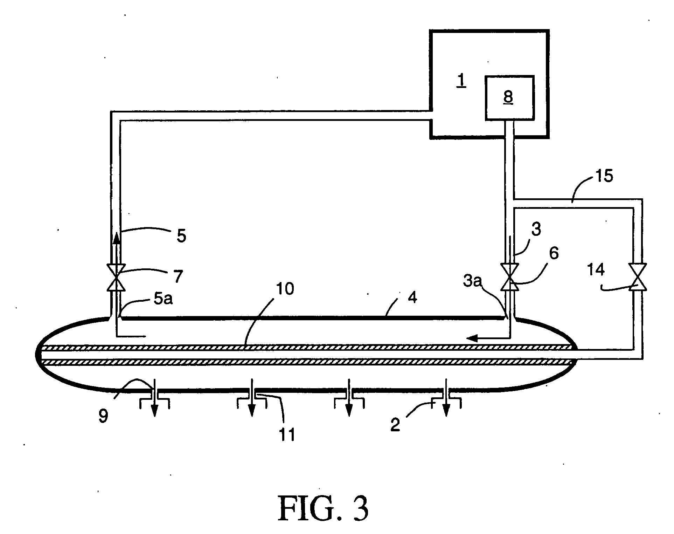

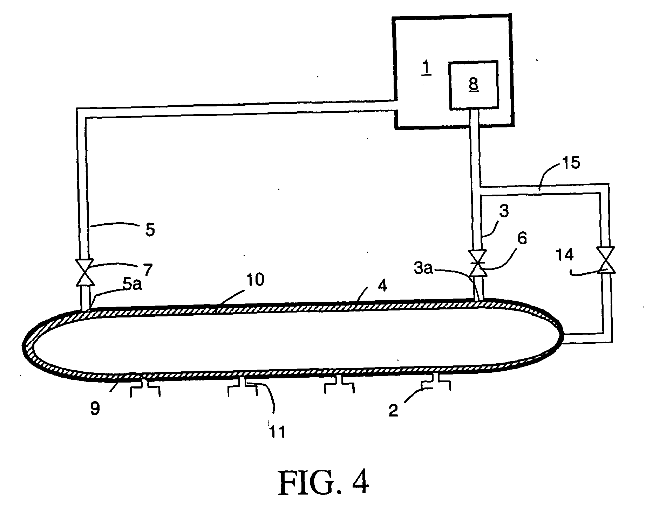

On se réfère maintenant aux figures 3 et 4 qui illustrent un autre mode de réalisation de l'invention.

Selon ce mode, les parties constitutives du dispositif sont, pour la grande majorité, identiques à celles des figures 1 et 2 et ne feront pas l'objet d'une description très détaillée.

Dans cet autre mode de réalisation, d'une part, le moyen d'expansion a été modifié et a été remplacé par un élément jouant un autre rôle dans le circuit de carburant du véhicule et, d'autre part, l'électrovanne 13 a été déplacée vers un autre point du dispositif (électrovanne nouvellement référencée 14).

Plus précisément, la pompe d'injection 8 de carburant GPL remplace avantageusement le moyen 12 en pompant dans le réservoir 1 et en injectant dans le volume interne de l'enveloppe 10 une quantité suffisante de GPL liquide pour que celle ci soit dans une position active en se dilatant de manière à occuper le volume total intérieur de la rampe 4 et ainsi obturer les orifices 9 ainsi que les embouchures 3a, 5a des conduites 3 et 5.

Pour aboutir à cette configuration, une conduite de dérivation 15 relie la conduite d'amenée 3 au volume intérieur de l'enveloppe 10 et, préférentiellement, un moyen commandé d'obturation 14 (généralement une électrovanne) est disposé dans cette conduite de dérivation entre le réservoir 1 et l'enveloppe 10, ce moyen commandé d'obturation ayant la même fonction que l'électrovanne 13 précédemment décrite.

La figure 3 illustre une configuration du dispositif lors du fonctionnement du moteur et la figure 4 illustre une configuration du dispositif lors de l'arrêt du moteur.

Lors du fonctionnement du moteur, la pompe 8 permet l'acheminement du carburant GPL du réservoir vers la rampe 4 via la conduite 3 et à travers l'embouchure 3a, le moyen d'obturation 6 étant maintenu en position ouverte et l'électrovanne 14 étant préférentiellement ouvert.

Avantageusement, le moyen 7 peut être en position ouverte pour évacuer le carburant non utilisé vers le réservoir 1.

Les pressions de carburant présentes entre l'extérieur et l'intérieur de l'enveloppe 10 sont, dans cette configuration, sensiblement égales, et ladite enveloppe 10 ne subit aucune pression visant à permettre son expansion. Dans cet état d'équilibre de pressions, l'enveloppe se trouve dans sa position de repos et n'occupe qu'un volume interne minimal de la rampe 4 de manière à ce que le carburant GPL circule vers les injecteurs 9 à travers les orifices 9.

A l'arrêt du moteur, le moyen d'obturation 6 est commandé pour basculer dans une position fermée et la pompe 8 présente un délai de fonctionnement supplémentaire après l'arrêt du moteur.

Par ce fonctionnement supplémentaire de la pompe, le carburant GPL circule uniquement dans la conduite de dérivation 15 et est introduit dans le volume interne de l'enveloppe pour permettre son expansion. Le délai de fonctionnement supplémentaire de la pompe 8 sera calculé de telle manière que l'enveloppe atteigne sa position active, celle qui permet l'expansion maximale de cette enveloppe avec les résultats et avantages comme décrits précédemment en relation avec la figure 2.

Après cette expansion, et dans le cas préféré où une électrovanne 14 est présente sur la conduite de dérivation 15 et en position ouverte, on ferme celle-ci de façon à éviter toute fuite de carburant et à maintenir l'enveloppe 10 dans sa position active.

Ainsi , le carburant GPL contenu dans l'enveloppe 10 est gardé dans un état liquide.

Préférentiellement, le moyen 7 (si celui-ci est ouvert) est finalement fermé de façon à isoler la rampe 4 du réservoir 1.

Lors du redémarrage du véhicule, la pompe 8 est d'abord mise en marche, puis le moyen d'obturation 6 et éventuellement le moyen d'obturation 7 sont basculés en position ouverte ainsi que l'électrovanne 14. L'enveloppe retrouve sa position de repos avec son volume initial de par l'équilibre des pressions régnant de part et d'autre de sa paroi.

Sans sortir du cadre de l'invention il est possible d'appliquer la présente invention à un moteur fonctionnant en carburation mixte (ou bicarburation) comme c'est le cas pour les moteurs fonctionnant avec un carburant GPL et un carburant essence

Dans ce type de moteur, il est prévu d'injecter le carburant GPL pendant une fraction du temps de fonctionnement dudit moteur puis d'injecter, dans une autre fraction du temps de fonctionnement, le carburant essence.

Dans cette configuration à carburation mixte, le dispositif d'injection tel que décrit précédemment peut non seulement s'appliquer à l'injection du carburant GPL mais aussi à l'injection de carburant essence.

Bien entendu, la présente invention n'est pas limitée aux exemples décrits ci-dessus mais englobe toutes variantes.

Notamment, il peut être prévu une multiplicité d'éléments expansibles disposés au droit des orifices 9 et/ou des embouchures 3a, 5a des conduites 3 et 5.

Dans ce cas, ces éléments expansibles sont reliés à des moyens d'expansion tels que décrits précédemment ou il peut être envisagé de relier chaque élément expansible avec des moyens d'expansion comme mentionné ci-dessus.

## Revendications

1. Dispositif d'injection d'un carburant pour un moteur à combustion interne, ledit dispositif comprenant au moins une rampe d'injection (4) communiquant avec au moins un injecteur (2) par un orifice de passage (9) du carburant, avec une conduite d'amenée de carburant (3) par une embouchure (3a) et avec une conduite de retour de carburant (5) par une embouchure (5a), et au moins un élément expansible (10) logé dans la rampe, **caractérisé en ce que** ledit élément expansible obture, en position active d'expansion, ledit orifice de passage et/ou lesdites embouchures.

2. Dispositif d'injection selon la revendication 1, dans lequel ledit élément comprend une enveloppe (10) élastique reliée à des moyens d'expansion (12) de ladite enveloppe.

3. Dispositif d'injection selon la revendication 2, dans lequel les moyens d'expansion (12) comportent des moyens d'injection d'un fluide sous pression à l'intérieur de ladite enveloppe.

4. Dispositif d'injection selon l'une des revendications 2 ou 3, dans lequel les moyens d'expansion (12) comprennent un vérin.

5. Dispositif d'injection selon l'une des revendications 2 ou 3, dans lequel les moyens d'expansion (12) comprennent au moins une pompe de direction assistée du véhicule.

6. Dispositif d'injection selon l'une des revendications 2 ou 3, dans lequel les moyens d'expansion (12) comprennent au moins une pompe d'injection (8) dudit carburant dans ladite rampe (4).

7. Dispositif d'injection selon l'une des revendications précédentes, dans lequel des moyens d'obturation (13, 14) sont disposés entre l'élément expansible (10) et les moyens d'expansion (12).

8. Dispositif d'injection selon la revendication 1, dans lequel le carburant est compris dans le groupe constitué par le GPL (gaz de pétrole liquéfié), le GNV (gaz naturel pour véhicules), le dimethylether (DME), le dimétoxyméthane, le dimétoxyéthane, le diéthyléther ou d'un mélange d'au moins deux desdits carburants.

9. Dispositif d'injection selon la revendication 1, **caractérisé en ce que** le carburant présente un point d'ébullition inférieur à la température ambiante sous la pression atmosphérique.

10. Application du dispositif d'injection selon l'une quelconque des revendications 1 à 9 à un fonctionnement en carburation mixte d'un moteur, dans lequel l'un des carburants est injecté par la rampe (4) pendant une fraction du temps de fonctionnement dudit moteur et l'autre des carburants étant injecté durant une autre fraction du temps de fonctionnement de ce moteur.

## Claims

1. A device for the injection of a fuel for an internal combustion engine, said device including at least one injection rail (4) which communicates with at least one injector (2) via a fuel passage orifice (9), with a fuel supply pipe (3) via a mouth (3a) and with a fuel return pipe (5) via a mouth (5a), and at least one expandable element (10) fitted inside the rail, **characterised in that** said expandable element obturates, in the active expansion position, said passage orifice and/or said mouths**.**

2. The injection device according to Claim 1, wherein said element includes a resilient casing (10) linked to expansion means (12) of said casing.

3. The injection device according to Claim 2, wherein the expansion means (12) comprise means for injecting a fluid under pressure inside said casing.

4. The injection device according to one of Claims 2 or 3, wherein the expansion means (12) include a cylinder.

5. The injection device according to one of Claims 2 or 3, wherein the expansion means (12) include at least one vehicle power steering pump.

6. The injection device according to one of Claims 2 or 3, wherein the expansion means (12) include at least one pump (8) for the injection of said fuel into said rail (4).

7. The injection device according to one of the preceding claims, wherein obturating means (13, 14) are arranged between the expandable element (10) and the expansion means (12).

8. The injection device according to Claim 1, wherein the fuel is included within the group constituted by LPG (liquefied petroleum gas), VNG (vehicle natural gas), dimethyl ether (DME), dimethoxymethane, dimethoxyethane, diethyl ether or a mixture of at least two of the said fuels.

9. The injection device according to Claim 1, **characterised in that** the fuel has a boiling point which is below ambient temperature under atmospheric pressure.

10. An application of the injection device according to any one of Claims 1 to 9 to a dual-fuel carburation engine operation, wherein one of the fuels is injected by the rail (4) during a fraction of the operating time of said engine and the other of the fuels is injected during another fraction of the operating time of this engine.

## Patentansprüche

1. Treibstoffeinspritzvorrichtung für einen Verbrennungsmotor, wobei die Vorrichtung mindestens eine Einspritzrampe (4), die mit mindestens einem Einspritzelement (2) durch eine Durchgangsöffnung (9) für den Treibstoff, mit einer Treibstoffzuleitung (3) durch eine Öffnung (3a) und mit einer Treibstoffrückleitung (5) durch eine Öffnung (5a) in Verbindung steht, und mindestens ein Dehnungselement (10), das in der Rampe angeordnet ist, umfasst, **dadurch gekennzeichnet, dass** das Dehnungselement in aktiver Dehnungsposition die Durchgangsöffnung und/oder die beiden übrigen Öffnungen verschließt.

2. Einspritzvorrichtung nach Anspruch 1, bei der das Element eine elastische Hülle (10) umfasst, die mit Dehnungsmitteln (12) der Hülle verbunden ist.

3. Einspritzvorrichtung nach Anspruch 2, bei der die Dehnungsmittel (12) Einspritzmittel für ein Druckfluid in das Innere der Hülle umfassen.

4. Einspritzvorrichtung nach einem der Ansprüche 2 oder 3, bei dem die Dehnungsmittel (12) einen Zylinder umfassen.

5. Einspritzvorrichtung nach einem der Ansprüche 2 oder 3, bei dem die Dehnungsmittel (12) mindestens eine Pumpe einer Servolenkung des Fahrzeugs umfassen.

6. Einspritzvorrichtung nach einem der Ansprüche 2 oder 3, bei der die Dehnungsmittel (12) mindestens eine Einspritzpumpe (8) für den Treibstoff in die Rampe (4) umfassen.

7. Einspritzvorrichtung nach einem der vorhergehenden Ansprüche, bei der Verschlussmittel (13, 14) zwischen dem Dehnungselement (10) und den Dehnungsmitteln (12) angeordnet sind.

8. Einspritzvorrichtung nach Anspruch 1, bei der der Treibstoff in der Gruppe enthalten ist, die von LPG (flüssiges Propangas), VNG (Fahrzeug-Erdgas), Dimethylether (DME), Dimetoxymethan, Dimetoxyethan, Diethylether oder einer Mischung von mindestens zwei dieser Treibstoffe gebildet ist.

9. Einspritzvorrichtung nach Anspruch 1, **dadurch gekennzeichnet, dass** der Treibstoff einen Siedepunkt aufweist, der geringer als die Raumtemperatur unter Luftdruck ist.

10. Anwendung der Einspritzvorrichtung nach einem der Ansprüche 1 bis 9 für einen Mischvergasungsbetrieb eines Motors, bei der einer der Treibstoffe durch die Rampe (4) während einer Bruchteils der Betriebszeit des Motors und der andere der Treibstoffe während eines weiteren Bruchteils der Betriebszeit dieses Motors eingespritzt wird.
